# EUROPEAN PATENT SPECIFICATION

(11) **EP 4 349 517 B1**
(45) Date of publication and mention of the grant of the patent: **08.04.2026**
(21) Application number: 22828169.7
(22) Date of filing: 31.05.2022
(51) Int. Cl.: B23K 9/04, B23K 9/032, B29C 64/106, B29C 64/393, B33Y 10/00, B33Y 30/00, B33Y 50/02, G06F 30/20, G06F 113/10, B22F 10/22, B22F 10/28, B22F 10/30, B22F 10/85, B22F 12/00, B22F 12/41

(54) **ADDITIVE MANUFACTURING SUPPORT DEVICE, AND ADDITIVE MANUFACTURING SUPPORT METHOD**
VORRICHTUNG UND VERFAHREN ZUR UNTERSTÜTZUNG DER ADDITIVEN FERTIGUNG
DISPOSITIF ET PROCÉDÉ DE SUPPORT DE FABRICATION ADDITIVE

(30) Priority: 23.06.2021 JP 2021104321
(43) Date of publication of application: 10.04.2024
(73) Proprietor: Kabushiki Kaisha Kobe Seiko Sho (Kobe Steel, Ltd.), Kobe-shi, Hyogo 651-8585 (JP)
(72) Inventor: SHINOZAKI, Takahiro, Kobe-shi, Hyogo 651-2271 (JP); HATSUDA, Akimine, Kobe-shi, Hyogo 651-2271 (JP)
(74) Representative: Müller-Boré & Partner Patentanwälte PartG mbB
(86) International application number: PCT/JP2022/022238
(87) International publication number: WO 2022/270251

(56) References cited:
- JP-A- 2020 001 059
- JP-A- 2020 097 193
- JP-A- 2020 114 677
- JP-A- 2021 016 988
- JP-A- H 091 376
- US-A1- 2020 050 119
- US-A1- 2020 156 323
- US-A1- 2020 265 122

## Description

The present invention relates to an additive manufacturing support device, and an additive manufacturing support method, see claims 1 and 3.

### BACKGROUND ART

An additive manufacturing method is known in which a three-dimensional object is built by sequentially depositing building materials on the basis of design data (CAD data). For example, Patent Literature 1 describes a method of predicting a fatigue life from a result of performing stress analysis on the basis of design data, comparing the obtained fatigue life and a design life and finally determining whether a building condition is proper.

### CITATION LIST

### PATENT LITERATURE

Patent Literature 1: JP2018-167565A Patent Literature 2 : US 2020/265122 A1, describing the preamble of claims 1 and 3

### SUMMARY OF INVENTION

### TECHNICAL PROBLEM

The above-mentioned additive manufacturing method includes a method in which a welding wire is melted and solidified by arc discharge to form a weld bead, and an object of a desired shape is manufactured by depositing the weld bead. However, when a part is built by deposition of the weld bead, unevenness by the weld bead occurs on the surface of the part. In the case of a part in which an inner space is formed, unevenness on the outer surface can be smoothed by post-processing. However, for unevenness on the inner surface of the part, since a tool such as an end mill cannot be inserted into the inner space, it may be difficult to remove the unevenness. When the unevenness remains, stress concentration by the unevenness may occur and a fatigue strength is likely to decrease.

Therefore, an objective of the present invention is to provide an additive manufacturing support device, and an additive manufacturing support method that suppresses occurrence of the stress concentration and improves the fatigue strength.

### SOLUTION TO PROBLEM

According to a first aspect of the present invention, an additive manufacturing support device for, when building a three-dimensionally shaped object by depositing a linear weld bead obtained by melting and solidifying a welding material, supporting determination of a bead forming trajectory representing formation order of the weld bead, is defined in claim 1, and the device including
a building condition acquisition unit configured to acquire information on a shape model of the object and a load condition applied to the object;
a stress analysis unit configured to obtain a maximum principal stress direction generated in each portion of the object, by stress analysis based on the acquired shape model and load condition; and
a trajectory determination unit configured to determine a forming direction of the weld bead on the basis of the maximum principal stress direction and the load condition.

(2) An additive manufacturing support device for, when building a three-dimensionally shaped object by depositing a linear weld bead obtained by melting and solidifying a welding material, supporting determination of a bead forming trajectory representing formation order of the weld bead, the device including:
a building condition acquisition unit configured to acquire information on a shape model of the object and a load condition applied to the object;
a temporary trajectory setting unit configured to temporarily set the bead forming trajectory for building the object, on the basis of the acquired shape model;
a stress analysis unit configured to obtain a maximum principal stress direction generated in each portion of the object, by stress analysis based on the shape model and the load condition according to the temporarily set bead forming trajectory; and
a trajectory determination unit configured to obtain a fatigue limit of each portion of the object from the temporarily set bead forming trajectory and the maximum principal stress direction obtained by the stress analysis, and when an obtained predicted fatigue limit of each portion is smaller than a preset design fatigue limit, and to determine the bead forming trajectory of each portion according to the maximum principal stress direction of a corresponding position obtained by the stress analysis.

According to a second aspect of the present invention, an additive manufacturing support method for, when building a three-dimensionally shaped object by depositing a linear weld bead obtained by melting and solidifying a welding material, supporting determination of a bead forming trajectory representing formation order of the weld bead, is defined in claim 3, the method including
a building condition acquisition step of acquiring information on a shape model of the object and a load condition applied to the object;
a stress analysis step of obtaining a maximum principal stress direction generated in each portion of the object, by stress analysis based on the acquired shape model and load condition; and
a trajectory determination step of determining a forming direction of the weld bead, on the basis of the maximum principal stress direction and the load condition.

A further preferred embodiment of the first aspect of the present invention is defined in the dependent claim.

### ADVANTAGEOUS EFFECTS OF INVENTION

According to the present invention, it is possible to form a weld bead in a bead forming trajectory that suppresses occurrence of stress concentration and improves a fatigue strength.

### BRIEF DESCRIPTION OF DRAWINGS

FIG. 1 is an overall configuration diagram of an additive manufacturing device.
FIG. 2 is a schematic function block diagram of a control unit.
FIG. 3A is an explanatory diagram showing a forming direction of a weld bead in which an additively manufactured object W is formed and a maximum principal stress direction of the additively manufactured object obtained by stress analysis.
FIG. 3B is an explanatory diagram showing the forming direction of the weld bead in which the additively manufactured object W is formed and the maximum principal stress direction of the additively manufactured object obtained by the stress analysis.
FIG. 4 is a flowchart showing a procedure for creating a building program that performs additive manufacturing.
FIG. 5A is a perspective view schematically showing an example of a shape model.
FIG. 5B is a cross-sectional view taken along line V-V of FIG. 5A.
FIG. 6 is an explanatory diagram showing the maximum principal stress direction obtained by the stress analysis of the shape model.
FIG. 7 is a graph schematically showing a state in which, when a repetitive stress is applied to test pieces with different bead forming directions, the number of repetitions of stress application until the test pieces break changes depending on an intersection angle between a stress application direction and the bead forming direction.
FIG. 8A is an explanatory diagram showing three types of test pieces with different bead forming directions.
FIG. 8B is an explanatory diagram showing three types of test pieces with different bead forming directions.
FIG. 8C is an explanatory diagram showing three types of test pieces with different bead forming directions.
FIG. 9 is a graph schematically showing a relationship between the intersection angle and a fatigue strength.
FIG. 10A is a perspective view schematically showing the weld bead in the shape model in which a bead forming trajectory is determined according to the maximum principal stress direction.
FIG. 10B is a cross-sectional view taken along line X-X shown in FIG. 10A.
FIG. 11 is a schematic function block diagram of a control unit in a second additive manufacturing support method.
FIG. 12 is a flowchart showing the procedure for creating the building program that performs the additive manufacturing.
FIG. 13 is a schematic explanatory diagram of the shape model in which stress concentration occurs.
FIG. 14 is a graph showing change characteristics of a stress concentration coefficient with respect to sizes of a plate thickness and a curvature of a corner portion in the case of cantilever bending.

### DESCRIPTION OF EMBODIMENTS

Hereinafter, embodiments of the present invention will be described in detail with reference to the drawings.

Here, a case where an additively manufactured object of a three-dimensional shape is manufactured by depositing, into a desired shape, a weld bead formed by melting and solidifying a filler metal using arc discharge will be described as an example, but the configurations of a building method and a building device are not limited thereto.

### <Configuration of additive manufacturing device>

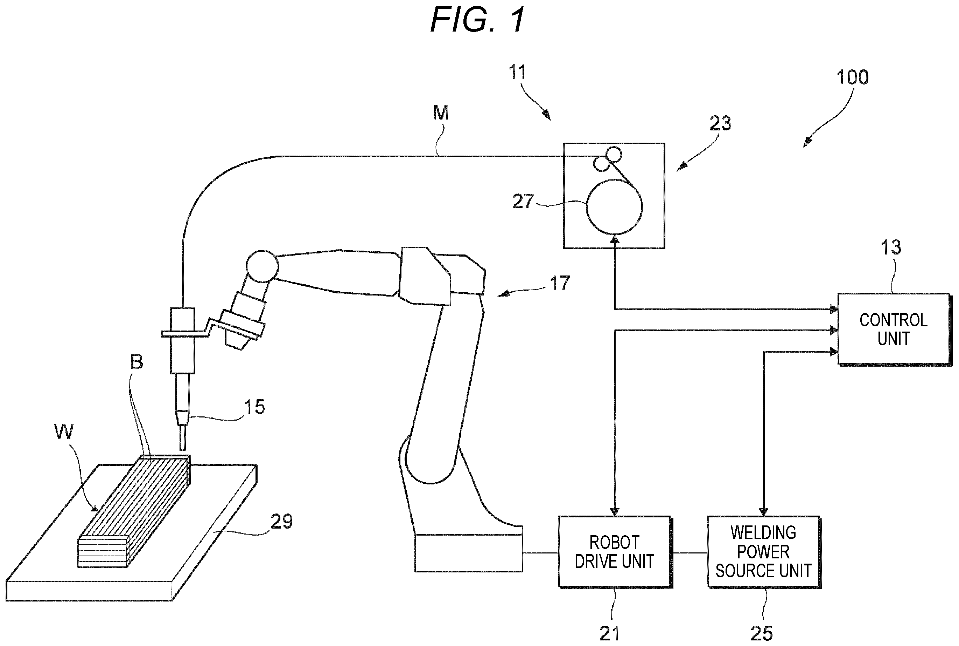

FIG. 1 is an overall configuration diagram of an additive manufacturing device 100. The additive manufacturing device 100 includes a building unit 11 which forms a weld bead B, and a control unit 13 which controls the building unit 11.

The building unit 11 includes a welding robot 17 which is equipped with a welding head having a welding torch 15 on a distal end shaft, a robot drive unit 21 which drives the welding robot 17, a filler metal supply unit 23 which supplies a filler metal (a welding wire) M to the welding torch 15, and a welding power source unit 25 which supplies a welding current.

### (Building unit)

The welding robot 17 is a multi-articulated robot, and the filler metal M which is continuously supplied is supported at a tip of the welding torch 15 attached to the distal end shaft of a robot arm. The position and posture of the welding torch 15 can be freely set three-dimensionally within the degree of freedom of the robot arm by a command from the robot drive unit 21.

The welding torch 15 is a torch for gas metal arc welding which has a shield nozzle (not shown) and is supplied with the shield gas from the shield nozzle. An arc welding method may be any one of a consumable electrode type such as coated arc welding or carbon gas arc welding and a non-consumable electrode type such as TIG welding or plasma arc welding, and is selected appropriately according to the additively manufactured object to be fabricated. For example, in the case of the consumable electrode type, a contact tip is disposed inside the shield nozzle, and the filler metal M to which a melting current is supplied is held in the contact tip. The welding torch 15 generates an arc from the tip of the filler metal M in a shield gas atmosphere while holding the filler metal M.

The filler metal supply unit 23 includes a reel 27 around which the filler metal M is wound. The filler metal M is sent from the filler metal supply unit 23 to a feeding mechanism (not shown) which is attached to the robot arm or the like, and is fed to the welding torch 15 while being fed forward or backward by the feeding mechanism as necessary.

As the filler metal M, any commercially available welding wire can be used. For example, a welding wire prescribed as a MAG welding and MIG welding solid wire (JIS Z 3312) for mild steel, high tensile strength steel, and low temperature steel, and an arc welding flux-cored wire (JIS Z 3313) for mild steel, high tensile strength steel, and low temperature steel, may be used. Furthermore, the filler metal M such as aluminum, aluminum alloy, nickel, and nickel-based alloy can be used according to required characteristics.

The robot drive unit 21 moves the welding torch 15 by driving the welding robot 17, and together with this, melts the continuously supplied filler metal M by the welding current and a welding voltage supplied from the welding power source unit 25.

A building program according to the additively manufactured object to be fabricated is transmitted to the robot drive unit 21 from the control unit 13. The building program is configured by a large number of instruction codes, and is created on the basis of an appropriate algorithm according to various conditions such as shape data (CAD data or the like), material, heat input, and the like of the additively manufactured object.

The robot drive unit 21 executes the received building program to drive the welding robot 17, the filler metal supply unit 23, the welding power source unit 25. and the like, and forms the weld bead according to the building program. That is to say, the robot drive unit 21 drives the welding robot 17 to move the welding torch 15 along a trajectory (bead forming trajectory) of the welding torch 15 set in the building program. At the same time, the robot drive unit 21 drives the filler metal supply unit 23 and the welding power source unit 25 according to welding conditions indicated by the building program, and melts and solidifies the filler metal M at the tip of the welding torch 15 by an arc. By this, the linear weld beads B are formed on a base plate 29. The weld beads B form weld bead layers which are formed adjacent to each other, and as next welding bead layers are deposited on top of the weld bead layers, an additively manufactured object W of a desired three-dimensional shape is built.

### (Control unit)

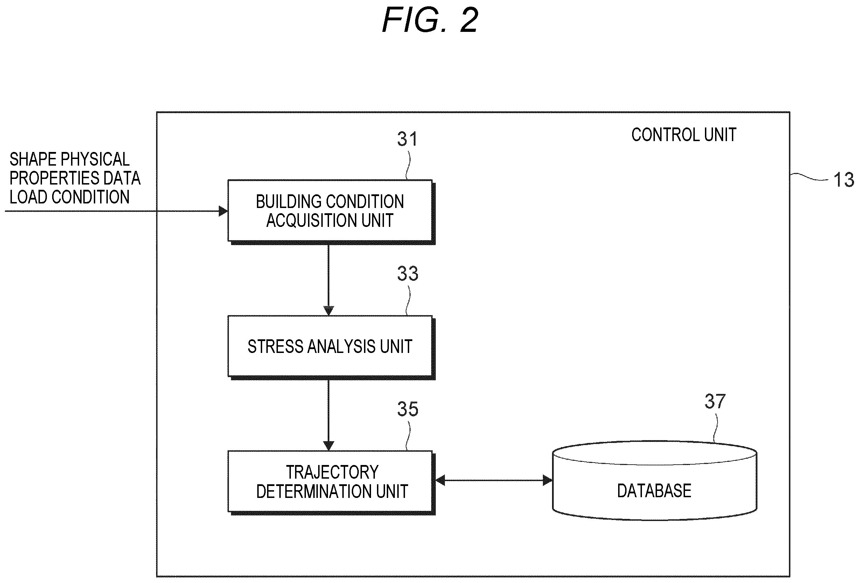

FIG. 2 is a schematic function block diagram of the control unit 13.

The control unit 13 determines the bead forming trajectory representing the formation order of the weld bead for building the additively manufactured object according to a building condition input thereto, and generates the above-mentioned building program. Moreover, the control unit 13 of this configuration also functions as an additive manufacturing support device which supports determination of the bead forming trajectory.

Although not shown, the control unit 13 is configured by a computer device including a processor such as a CPU, a memory such as a ROM and a RAM, and a storage such as an HD (hard disk drive) and an SSD (solid state drive). The control unit 13 includes a building condition acquisition unit 31, a stress analysis unit 33, a trajectory determination unit 35, and a database 37, the details of which will be described later. The above-mentioned respective components operate by commands from the CPU and implement respective functions.

Further, the control unit 13 may be configured to be disposed separately from the building unit 11 and to be connected to the building unit 11 from a remote place via a communication means such as a network. In addition to being created by the control unit 13, the building program may be created by another device and input to the control unit 13 via communication or a storage medium. In other words, the additive manufacturing support device is not limited to a type accompanying the additive manufacturing device 100, but may be installed at another location separately from the additive manufacturing device 100.

### (Additive manufacturing support method and creation of building program)

Next, a detailed procedure in which the control unit 13 generates the building program will be explained.

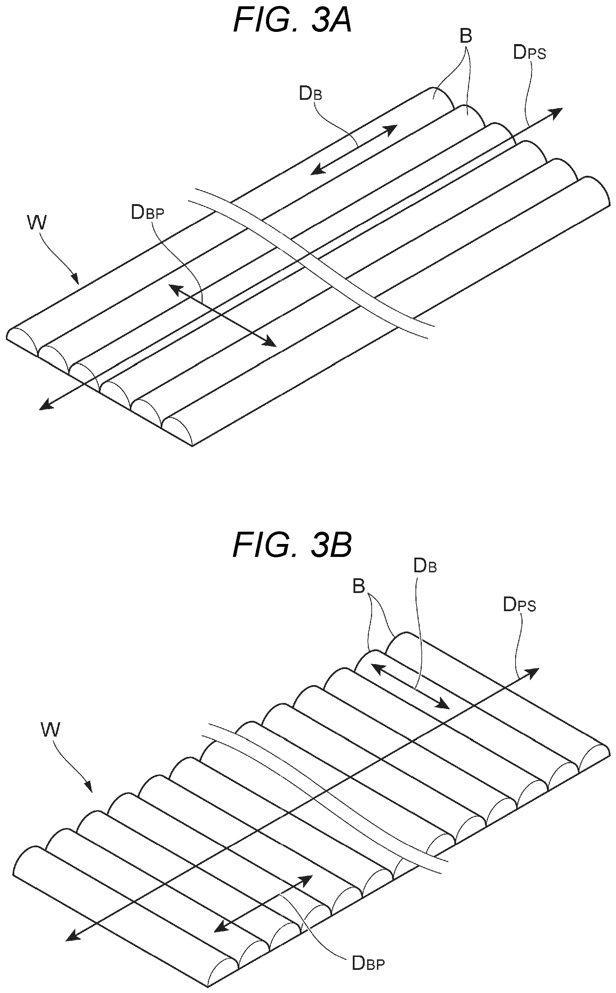

FIGS. 3A and 3B are explanatory diagrams showing a bead forming direction D_{B} of the weld bead B which forms the additively manufactured object W and a maximum principal stress direction D_{PS} of the additively manufactured object W obtained by the stress analysis.

Unevenness occurs on a surface of the additively manufactured object W by a plurality of rows of weld beads B, but, when the unevenness cannot be flattened by machining or the like, stress concentration due to the unevenness remaining on the surface is unavoidable. As shown in FIG. 3A, when the bead forming direction D_{B} of the weld bead B and the maximum principal stress direction D_{PS} of the additively manufactured object W are parallel, the unevenness by the weld bead B is unlikely to cause the stress concentration to occur, and exerts small influence on a fatigue limit of the additively manufactured object W. On the other hand, as shown in FIG. 3B, when the bead forming direction D_{B} of the weld bead B and the maximum principal stress direction D_{PS} of the additively manufactured object W intersect (orthogonally in FIG. 3B), the unevenness by the weld bead B causes the stress concentration to occur, and exerts large influence on the fatigue limit of the additively manufactured object W.

Namely, the smaller the angle formed between the bead forming direction D_{B} of the weld bead B and the maximum principal stress direction D_{PS} is, the less the stress concentration occurs, and the fatigue limit of the additively manufactured object W becomes larger. Therefore, the bead forming trajectory when building the additively manufactured object W is set so that a bead arrangement direction D_{BP} of the weld beads B that are adjacent to each other in the additively manufactured object W after building deviates from the maximum principal stress direction D_{PS}. A deviation amount may be desirably ±5° or more, more desirably ±10° or more, still more desirably 20° or more, and particularly desirably ±30° or more or ±40° or more.

In a metal material used for a building member, breakage due to metal fatigue is often a major cause of breakage, and fatigue design that takes the breakage due to the metal fatigue into consideration is desired. The fatigue design is performed on the basis of fatigue characteristics of a material. The fatigue characteristics can be acquired by conducting a long-term durability test with various loads to determine a fatigue limit of a single material. This durability test is performed by evaluating the tensile and compressive fatigue limit of an axial load in the basic fatigue characteristics of a single material. Thus, in the present specification, this tensile and compressive fatigue limit will be referred to as a "fatigue limit".

### <Procedure of first additive manufacturing support method>

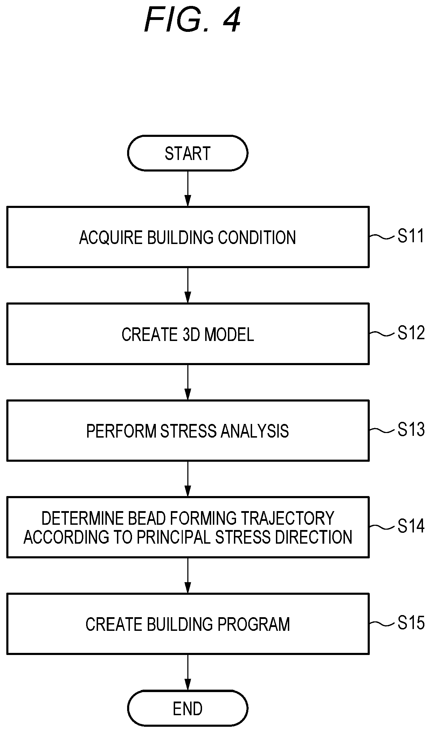

FIG. 4 is a flowchart showing a procedure for creating the building program that performs additive manufacturing.

The shown procedure for creating the building program is also a procedure of an additive manufacturing support method for determining the bead forming trajectory for forming the weld bead.

First, by an operator, information such as physical properties, shape, welding conditions, and the like of the additively manufactured object to be fabricated and information on a load condition to be applied to the additively manufactured object are input to the building condition acquisition unit 31 of the control unit 13 shown in FIG. 2 (S11). The building condition acquisition unit 31 generates a shape model representing the three-dimensional shape of the additively manufactured object on the basis of the acquired information (S12).

The building condition acquisition unit 31 outputs information on the generated shape model, and information on physical properties, the load condition, and the like to the stress analysis unit 33. The stress analysis unit 33 mainly performs stress analysis on the basis of the acquired shape model, physical properties, and load condition, and obtains a maximum principal stress direction generated in each portion of the additively manufactured object, in an applied state of an external force assumed under a situation in which the additively manufacturing object is actually used (S13).

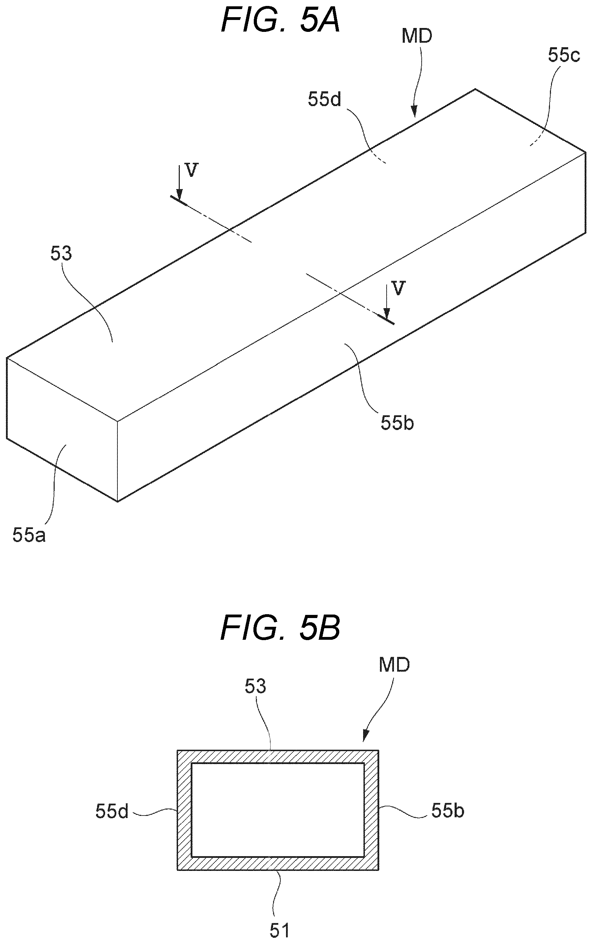

FIG. 5A is a perspective view schematically showing an example of the shape model. FIG. 5B is a cross-sectional view taken along line V-V of FIG. 5A.

Explanation will be made using a simple rectangular parallelepiped shape model, but the shape model is a shape of the additively manufactured object to be actually fabricated.

As shown in FIGS. 5A and 5B, an illustrated shape model MD is a hollow rectangular parallelepiped including a bottom plate portion 51, a top plate portion 53, and four side plate portions 55a, 55b, 55c, and 55d disposed between the bottom plate portion 51 and the top plate portion 53. The stress analysis is performed in the shape model MD on the basis of the acquired load condition. For example, as the stress analysis, a known method such as a finite element method (FEM) can be used. When acquiring a stress distribution by the FEM, when a location that requires attention in design is known in advance, it is desirable to adjust a mesh size depending on a place, such as by making a mesh corresponding to the location finer. In addition to the stress analysis using the FEM, a stress analysis database may be prepared in which stress analysis results corresponding to a partial shape of the three-dimensional additively manufactured object are stored in advance, and this stress analysis database may be referenced to obtain the stress distribution generated in the shape model MD.

The load condition may be a condition in which a predetermined external force is applied from a direction that is assumed to actually act on the additively manufactured object, but for example, a tensile load or a compressive load may be applied along a longitudinal direction or a bending moment may be applied to both ends in the longitudinal direction. From the stress distribution of each portion of the shape model obtained through such stress analysis, a portion where a stress is concentrated is extracted, and a maximum principal stress and a direction of the maximum principal stress are acquired.

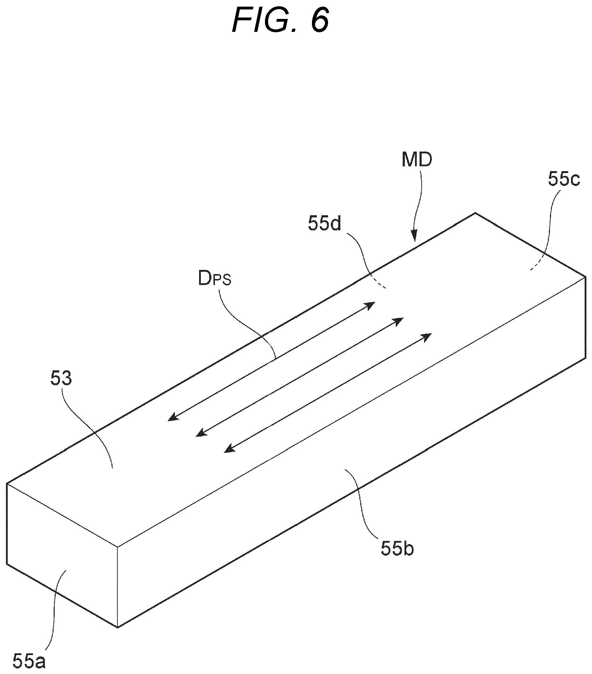

FIG. 6 is an explanatory diagram showing the maximum principal stress direction obtained by the stress analysis of the shape model MD. When the shape model MD is deformed under any of the load conditions described above, the maximum principal stress generated in the top plate portion 53 of the shape model MD becomes the maximum principal stress direction D_{PS} along the longitudinal direction shown by the arrow.

The trajectory determination unit 35 shown in FIG. 2 determines an appropriate bead forming direction in consideration of information on the obtained maximum principal stress and a stress concentrating portion. Here, a relationship between an arrangement direction of the weld beads and fatigue limit characteristics may be obtained in advance, and by referring to the relationship, the bead forming direction in which good fatigue characteristics are obtained according to the maximum principal stress direction is determined (S14).

Specifically, the bead forming direction is determined in the following procedure.

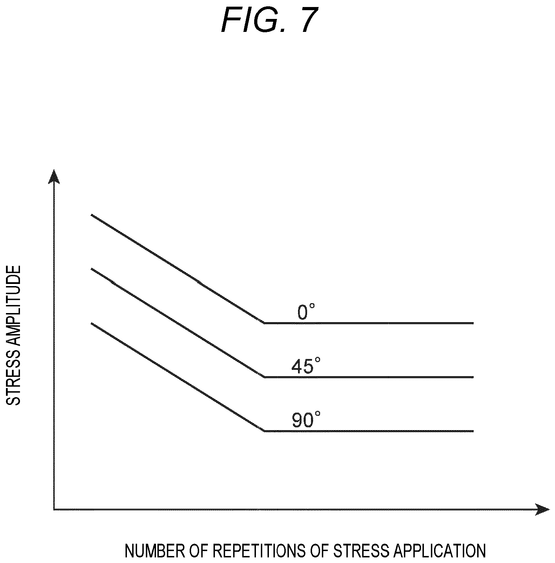

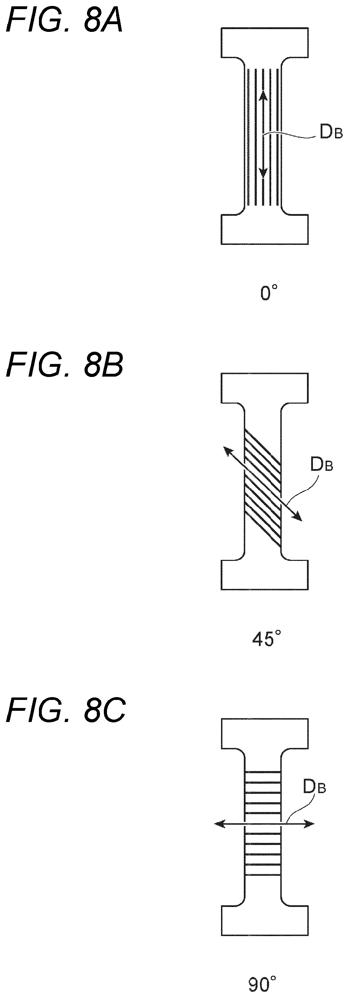

FIG. 7 is a graph schematically showing a state in which, when a repetitive stress is applied to test pieces with different bead forming directions, the number of repetitions of stress application until the test pieces break changes depending on an intersection angle between a stress application direction and the bead forming direction. FIGS. 8A, 8B, and 8C are explanatory diagrams showing three types of test pieces with different bead forming directions.

FIG. 8A shows a test piece in which the bead forming direction D_{B} coincides with a longitudinal direction (stress application direction) of the test piece (intersection angle: 0°), FIG. 8B shows a test piece in which the bead forming direction D_{B} is inclined from the longitudinal direction of the test piece (intersection angle: 45°), and FIG. 8C shows a test piece in which the bead forming direction D_{B} is orthogonal to the longitudinal direction of the test piece (intersection angle: 90°). The graph shown in FIG. 7 is a result of obtaining a breaking strength by repeatedly applying a tensile load in the longitudinal direction to the three types of test pieces. As schematically shown in FIG. 7, the smaller the intersection angle is, the larger a stress amplitude can be applied, and the fatigue limit is improved.

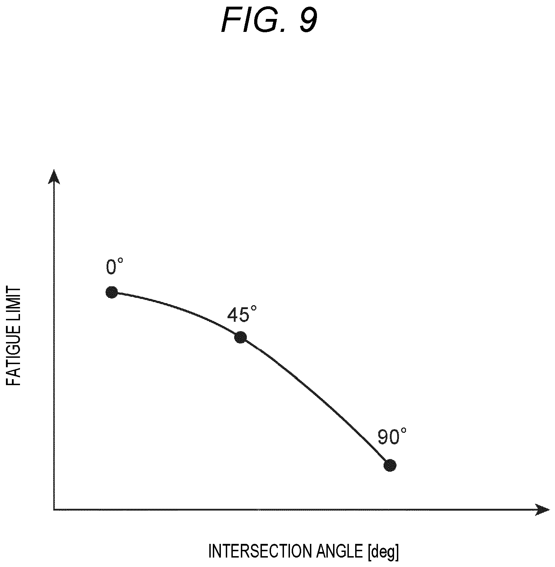

FIG. 9 is a graph schematically showing a relationship between the intersection angle and a fatigue strength.

As shown in FIG. 9, the intersection angle and the fatigue strength have a clear correlation. Therefore, the database 37 (FIG. 2) which correlates the fatigue limit of the weld bead with the above-mentioned intersection angle is prepared. By referring to the database 37 from information on the maximum principal stress direction D_{PS} input from the stress analysis unit 33, the trajectory determination unit 35 obtains a range of the intersection angle according to a required design fatigue limit. In this way, the intersection angle between the maximum principal stress direction D_{PS} and the bead forming direction D_{B} is made small. That is to say, the bead forming trajectory is determined so that the bead arrangement direction deviates from the maximum principal stress direction D_{PS}.

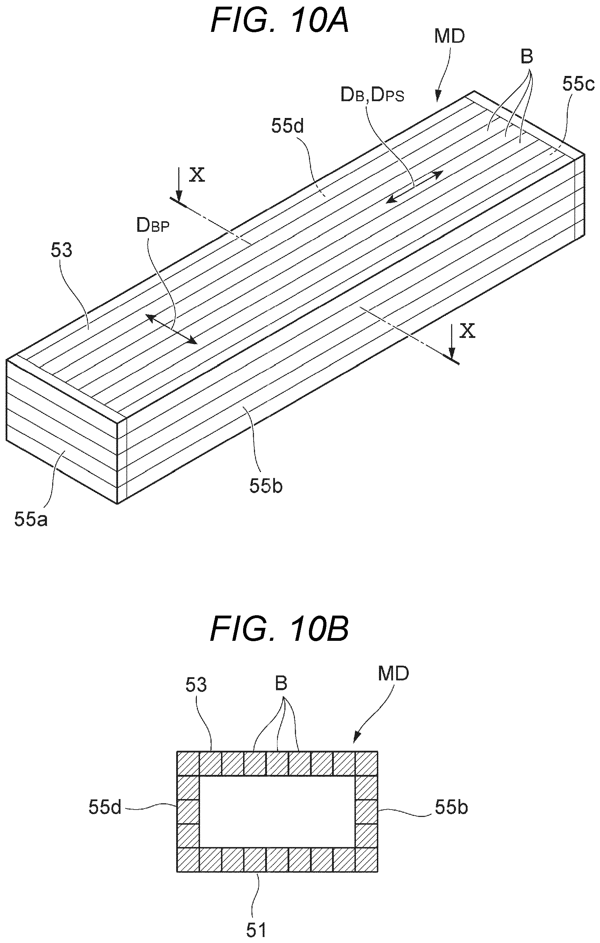

FIG. 10A is a perspective view schematically showing the weld bead in the shape model in which the bead forming trajectory is determined according to the maximum principal stress direction. FIG. 10B is a cross-sectional view taken along line X-X shown in FIG. 10A.

As shown in FIG. 10A, in the top plate portion 53 of the shape model MD, the weld beads B are formed so that the bead forming direction D_{B} coincides with the maximum principal stress direction D_{PS}, and the arrangement direction D_{BP} of the weld beads B that are adjacent to each other is orthogonal to the maximum principal stress direction D_{PS}. This shape model MD is a hollow rectangular parallelepiped as shown in FIG. 10B. Further, although not shown, similarly, in the bottom plate portion 51 and the side plate portions 55b and 55d along the longitudinal direction, the longitudinal direction of the shape model MD is the maximum principal stress direction D_{PS}, and the arrangement direction D_{BP} of the weld beads B is orthogonal to the maximum principal stress direction D_{PS}.

Regarding the side plate portions 55a and 55c of the shape model MD, in the case where, as a result of the stress analysis, a maximum principal stress in the side plate portions 55a and 55c is in a horizontal direction, the weld beads B are formed along the maximum principal stress direction of the horizontal direction.

In addition, in the determination of the bead forming trajectory, by slicing the shape model in a specific direction for a thickness of each weld bead, the bead forming trajectory is determined within each layered slice layer, but it is desirable to adjust the bead forming trajectory within a layer including a slicing direction.

After determining the slice direction and the bead forming trajectory, the size of the weld bead, welding conditions necessary for deposition, and the like are appropriately determined. Since the bead forming trajectory only needs to generate the fatigue limit equal to or larger than the required design fatigue limit, it is not inevitably necessary to make the maximum principal stress direction D_{PS} and the bead forming direction D_{B} parallel (intersection angle: 0°). In addition, for a portion where the outer surface of the additively manufactured object is not post-processed into a flat shape (for example, the internal space of the additively manufactured object), it is desirable to set more strictly the angle formed between the maximum principal stress direction D_{PS} and the bead arrangement direction D_{BP}.

Based on the bead forming trajectory determined by the trajectory determination unit 35 in this way and the information such as welding conditions, the control unit 13 generates the above-mentioned building program (S15). The generated building program is sent to the robot drive unit 21 shown in FIG. 1. The robot drive unit 21 executes the received building program according to an operator's manipulation, and builds the additively manufactured object as a target.

Furthermore, as a result of the stress analysis, even in the case of a part having an intersection angle of 90 degrees in which the fatigue limit decreases most, when the part serves as a part capable of ensuring sufficient strength, it is not necessary to intentionally deviate the principal stress direction and the bead arrangement direction from each other.

According to the above-described additive manufacturing support method and generation procedure of the building program, it is possible to support an operator's additive manufacturing plan while satisfying the required design fatigue limit. Moreover, by using a database which correlates the fatigue limit of the weld bead with the intersection angle, an allowable range in which the bead forming direction is able to be set becomes clear, and the efficiency of an operation of determining the bead forming trajectory can be improved. This makes it possible to accurately and quickly create a more appropriate building plan (building program).

### <Procedure of second additive manufacturing support method>

In the procedure of the first additive manufacturing support method described above, the bead forming trajectory is determined according to the maximum principal stress direction obtained by the stress analysis of the input shape model. On the other hand, in a procedure of a second additive manufacturing support method to be described below, first, the bead forming trajectory is determined by trajectory planning with emphasis on productivity and buildability on the basis of the input shape model. After that, the maximum principal stress direction of the shape model is obtained, and by determining whether an estimated fatigue limit estimated thereby is equal to or larger than the required design fatigue limit, the bead forming trajectory is corrected until the fatigue limit equal to or larger than the design fatigue limit is obtained.

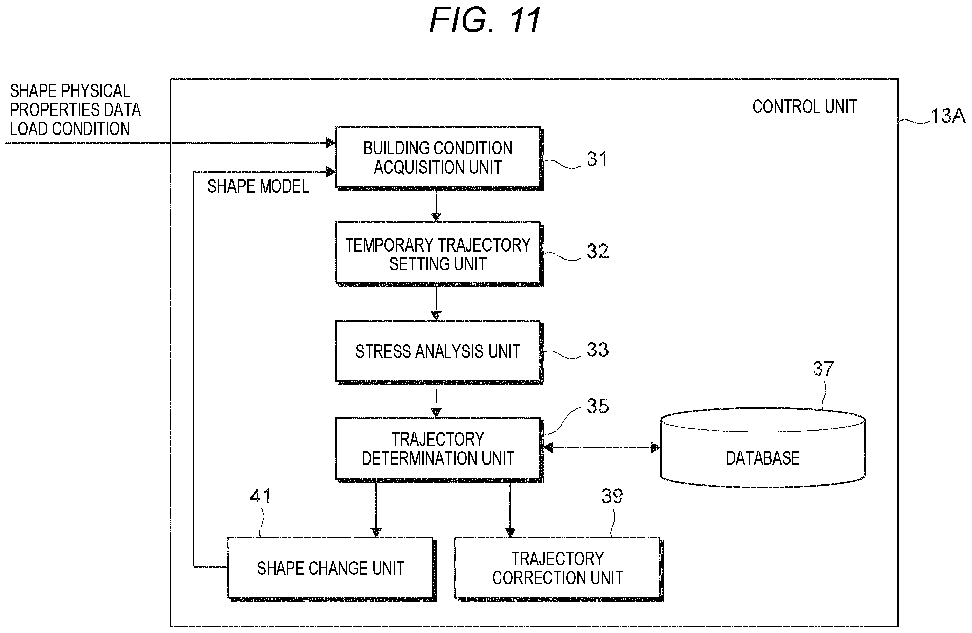

FIG. 11 is a schematic function block diagram of a control unit 13A in the second additive manufacturing support method.

The control unit 13A includes the above-mentioned building condition acquisition unit 31, stress analysis unit 33, trajectory determination unit 35, and database 37, and together with this, further includes a temporary trajectory setting unit 32, a trajectory correction unit 39, and a shape change unit 41, the details of which will be described later. The respective components operate by commands from the CPU and implement respective functions.

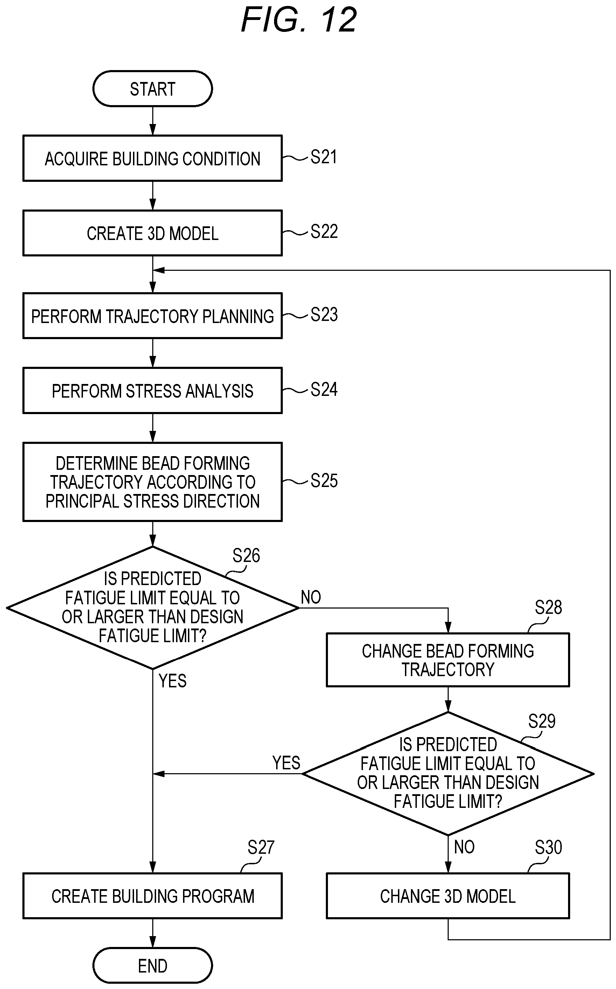

FIG. 12 is a flowchart showing a procedure for creating the building program that performs additive manufacturing.

The acquisition of the building condition (S21) and the generation of the shape model representing the three-dimensional shape of the additively manufactured object on the basis of the acquired information (S22) are the same as S11 and S12 described above.

The building condition acquisition unit 31 outputs information on the generated shape model to the temporary trajectory setting unit 32. The temporary trajectory setting unit 32 determines the bead forming trajectory with high productivity and buildability on the basis of the acquired shape model. In other words, by slicing the shape model in a specific direction for the thickness of each weld bead, the bead forming trajectory is determined within each layered slice layer. Even here, it is desirable to adjust the bead forming trajectory within the layer including the slicing direction.

Next, the temporary trajectory setting unit 32 outputs information on the shape model of the additively manufactured object formed by the bead forming trajectory, information on physical properties, the load condition, and the like to the stress analysis unit 33. The stress analysis unit 33 performs stress analysis on the basis of the acquired shape model, physical properties, and load condition, and obtains a maximum principal stress direction generated in each portion of the additively manufactured object (S24). Then, the trajectory determination unit 35 determines the bead forming trajectory as described above according to the obtained maximum principal stress direction (S25). The steps of S24 and S25 are similar to the steps of S13 and S14 in FIG. 4.

Then, when the additively manufactured object is built by the determined bead forming trajectory, the trajectory determination unit 35 determines whether a predicted fatigue limit obtained by referring to the database 37 is equal to or larger than the required design fatigue limit (S26). For example, by referring to the relationship between the intersection angle and the fatigue limit shown in FIG. 9 described above, whether an intersection angle between a bead forming direction and a maximum principal stress direction in a low-strength portion where fatigue fracture is predicted is an angle that can obtain a strength equal to or larger than the design fatigue limit is determined. When the predicted fatigue limit of the additively manufactured object is equal to or larger than the design fatigue limit, the building program is created on the basis of the determined bead forming trajectory (S27).

When the predicted fatigue limit of the additively manufactured object is smaller than the design fatigue limit, the trajectory correction unit 39 changes the bead forming trajectory in a direction that suppresses the stress concentration and increases the fatigue limit (S28). Then, it is determined whether the predicted fatigue limit of the additively manufactured object to be built using the changed bead forming trajectory is equal to or larger than the design fatigue limit (S29), and when the predicted fatigue limit of the additively manufactured object is equal to or larger than the design fatigue limit, the building program is created on the basis of a corrected bead forming trajectory (S27).

Here, the stress analysis unit 33 may have a function of obtaining the stress distribution of the object and extracting a stress concentrating portion which has a higher stress concentration coefficient than a surrounding. In this case, the trajectory determination unit 35 may determine the bead forming trajectory only in the extracted stress concentrating portion according to the maximum principal stress direction. According to this, correction may be performed more efficiently than when correcting the bead forming direction of the entire object.

When the predicted fatigue limit is smaller than the design fatigue limit even in the additively manufactured object W after change, the shape change unit 41 changes the original shape model (S30). For example, for a hollow portion, a complicated portion, and the like of the shape model, by simplifying a shape, giving a corner a round shape, and so on, the stress concentration is alleviated and the predicted fatigue limit is improved. Then, the shape change unit 41 inputs information on the shape model after change to the building condition acquisition unit 31, and the building condition acquisition unit 31 causes the temporary trajectory setting unit 32 to perform trajectory planning again (S23). Namely, by repeating the steps of determining the bead forming trajectory, stress analysis, and correction, the building condition that exceeds the design fatigue limit is searched for.

Here, a specific example of changing the shape model will be described.

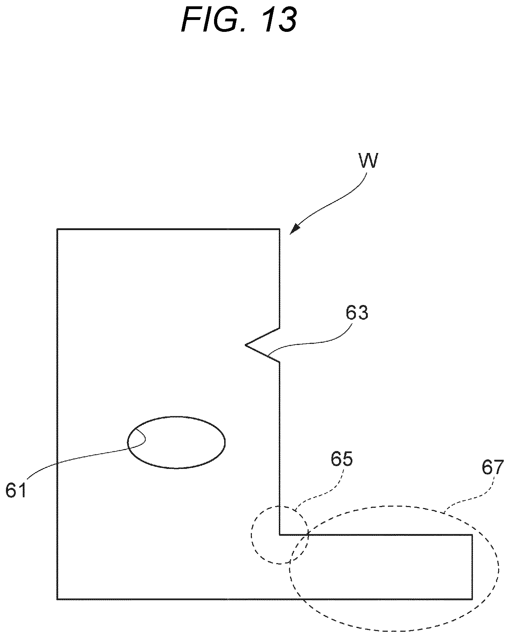

FIG. 13 is a schematic explanatory diagram of the shape model MD in which the stress concentration occurs.

Places where the stress concentration occurs include, for example, a hollow portion 61, a notch portion 63, a corner portion 65, and a portion 67 where a cross section suddenly changes. In order to improve the fatigue limit, a shape needs to be changed so that the hollow portion 61 and the notch portion 63 do not exist, the corner portion 65 needs to be sufficiently rounded to make the surface smooth, and the portion 67 where a cross section suddenly changes needs to be changed to a shape where a cross section changes gradually.

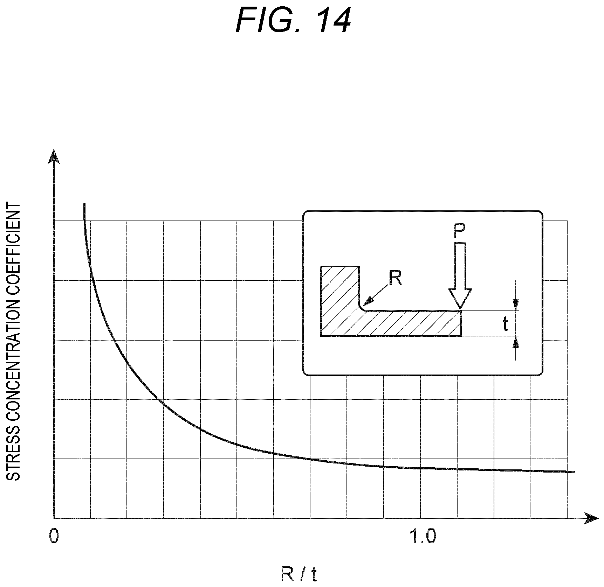

FIG. 14 is a graph showing change characteristics of the stress concentration coefficient with respect to sizes of a plate thickness and a curvature of a corner portion in the case of cantilever bending.

In a case where a load P is applied to a root portion of a plate-like portion which is bent into an L-shaped cross section, when a radius R of the curvature of the corner portion at the root portion of the plate-like portion is small and when a plate thickness t of the plate-like portion is small, the stress concentration coefficient increases. However, in a case where the plate thickness t of the plate-like portion is sufficiently thick, even when the radius R of the curvature of the corner portion is made small, an amount of change in the stress concentration coefficient is small. According to a relationship between a ratio R/t of the radius R of the curvature to the plate thickness t and the stress concentration coefficient shown in FIG. 14, when the ratio R/t is a small value less than 1, change in the stress concentration coefficient is large, but when the ratio R/t is 1 or more, there is little change in the stress concentration coefficient. Therefore, in order to increase the fatigue limit, it is not necessary to unnecessarily increase the radius R of the curvature of the corner portion, and the radius R of the curvature of the corner portion may be appropriately set according to the plate thickness t.

According to the above-described additive manufacturing support method and generation procedure of the building program, the bead forming trajectory is determined with emphasis on productivity and buildability on the basis of the initially input shape model, and when the predicted fatigue limit of the additively manufactured object to be built thereby is smaller than the required design fatigue limit, the bead forming trajectory is corrected or the shape model is corrected. Therefore, when the sufficient fatigue limit can be secured with the initially set bead forming trajectory, correction of the bead forming trajectory is omitted. According to this, a correction range of an overall trajectory plan may be kept minimum, and productivity and buildability are not unnecessarily reduced. Additionally, even when a correction for obtaining the required fatigue limit cannot be made by simply correcting the bead forming direction, it is possible to improve the degree of freedom in trajectory planning so that the correction can be made by changing the shape of a partial structure.

A series of procedures for generating the building program in the first and second additive manufacturing support methods described above may be created as a program to be executed by a computer (for example, the additive manufacturing support device). In this case, by appropriately executing this program on a computer, the operator can generate a more appropriate building program with a simple operation.

The trajectory correction unit 39 and the shape change unit 41 connected to the trajectory determination unit 35 shown in FIG. 11 may be provided in the trajectory determination unit 35 of FIG. 2 in the first additive manufacturing support method. In this case, even when a portion of the shape model is smaller than the design fatigue limit, the trajectory correction unit 39 corrects the bead forming trajectory, and the shape change unit 41 changes the shape model, so that the entire shape model can be equal to or larger than the design fatigue limit.

### REFERENCE SIGNS LIST

11: Building unit
13: Control unit
13A: Control unit
15: Welding torch
17: Welding robot
21: Robot drive unit
23: Filler metal supply unit
25: Welding power source unit
27: Reel
29: Base plate
31: Building condition acquisition unit
32: Temporary trajectory setting unit
33: Stress analysis unit
35: Trajectory determination unit
37: Database
39: Trajectory correction unit
41: Shape change unit
51: Bottom plate portion
53: Top plate portion
55a, 55b, 55c, 55d: Side plate portions
61: Hollow portion
63: Notch portion
65: Corner portion
67: Portion where a cross section changes suddenly
100: Additive manufacturing device
M: Filler metal
B: Weld bead
W: Additively manufactured object
D_{B}: Bead forming direction
D_{PS}: Maximum principal stress direction
D_{BP}: Bead arrangement direction

## Claims

1. An additive manufacturing support device for, when building a three-dimensionally shaped object by depositing a linear weld bead (B) obtained by melting and solidifying a welding material, supporting determination of a bead forming trajectory representing formation order of the weld bead (B), the device comprising:
a building condition acquisition unit (31) configured to acquire information on a shape model of the object and a load condition applied to the object;
the additive manufacturing support device being **characterised by**:
a stress analysis unit (33) configured to obtain a maximum principal stress direction (D_{PS}) generated in each portion of the object, by stress analysis based on the acquired shape model and load condition;
a trajectory determination unit (35) configured to determine a forming direction of the weld bead (B) on the basis of the maximum principal stress direction (D_{PS}) and the load condition; and
a database (37) configured to correlate a fatigue limit of the weld bead (B) with an intersection angle between the forming direction of the weld bead (B) and an acting direction of a stress generated in the weld bead (B), wherein:
the trajectory determination unit (35) is configured to determine, by referring to the database (37), the forming direction of the weld bead (B) in the bead forming trajectory, within a range of the intersection angle that is equal to or larger than a preset design fatigue limit;
wherein the additive manufacturing support device, further includes:
a trajectory correction unit (39) configured to, when there is a low-strength portion in which the fatigue limit corresponding to the bead forming trajectory determined by the trajectory determination unit (35) is smaller than a preset design fatigue limit, correct the bead forming trajectory in the low-strength portion such that the fatigue limit increases; and
a shape change unit (41) configured to:
when there is a low-strength portion in which the fatigue limit corresponding to the bead forming trajectory corrected by the trajectory correction unit (39) is smaller than a preset design fatigue limit, change the shape model such that the fatigue limit increases; and
change a partial structure which the shape model has, into a shape model in which a stress concentration coefficient for the corresponding structure is small, and to output the shape model after change to the building condition acquisition unit (31).

2. The additive manufacturing support device according to claim 1, wherein:
the stress analysis unit (33) further has a function of obtaining a stress distribution of the object and extracting a stress concentrating portion having a higher stress concentration coefficient than a surrounding; and
the trajectory determination unit (35) is configured to determine the bead forming trajectory only in the extracted stress concentrating portion according to the maximum principal stress direction (D_{PS}).

3. An additive manufacturing support method for, when building a three-dimensionally shaped object by depositing a linear weld bead (B) obtained by melting and solidifying a welding material, supporting determination of a bead forming trajectory representing formation order of the weld bead (B), the method comprising:
a building condition acquisition step (S11) of acquiring information on a shape model of the object and a load condition applied to the object, and inputting the acquired shape model and load condition to a building condition acquisition unit (31), which generates a shape model representing the three-dimensional shape of the additively manufactured object on the basis of the acquired information (S12);
the additive manufacturing support method being **characterised by**:
a stress analysis step (S13) of obtaining a maximum principal stress direction (D_{PS}) generated in each portion of the object, by stress analysis based on the acquired shape model and load condition; and
a trajectory determination step (S14) of determining a forming direction of the weld bead (B), on the basis of the maximum principal stress direction (D_{PS}) and the load condition;
by using a database (37), a step of correlating a fatigue limit of the weld bead (B) with an intersection angle between the forming direction of the weld bead (B) and an acting direction of a stress generated in the weld bead (B);
by using a trajectory determination unit (35), a step of determining, by referring to the database (37), the forming direction of the weld bead (B) in the bead forming trajectory, within a range of the intersection angle that is equal to or larger than a preset design fatigue limit;
when there is a low-strength portion in which the fatigue limit corresponding to the bead forming trajectory determined by the trajectory determination unit (35) is smaller than a preset design fatigue limit, by using a trajectory correction unit (39), a step of correcting the bead forming trajectory in the low-strength portion such that the fatigue limit increases; and
when there is a low-strength portion in which the fatigue limit corresponding to the bead forming trajectory corrected by the trajectory correction unit (39) is smaller than a preset design fatigue limit, by using a shape change unit (41), a step of changing the shape model such that the fatigue limit increases;
wherein the shape change unit (41) changes a partial structure which the shape model has, into a shape model in which a stress concentration coefficient for the corresponding structure is small, and to output the shape model after change to the building condition acquisition unit (31).

## Patentansprüche

1. Additive Fertigungsunterstützungsvorrichtung für die Unterstützung der Bestimmung einer nahtbildungsbahnverlaufdarstellenden Bildungsreihenfolge der Schweißnaht (B) beim Bauen eines dreidimensional geformten Objekts durch Aufbringen einer linearen Schweißnaht (B), wobei die Vorrichtung umfasst:
eine Baubedingungserfassungseinheit (31), konfiguriert, um Informationen eines Formmodells des Objekts und eine auf das Objekt ausgeübte Lastbedingung zu erfassen;
wobei die additive Fertigungsunterstützungsvorrichtung **gekennzeichnet ist durch**:
eine Spannungsanalyseeinheit (33), konfiguriert, um eine maximale Hauptspannungsrichtung (D_{PS}) zu erhalten, die in jedem Abschnitt des Objekts erzeugt wird, **durch** Spannungsanalyse basierend auf dem erfassten Formmodell und der Lastbedingung;
eine Bahnverlaufsbestimmungseinheit (35), konfiguriert, um eine Bildungsrichtung der Schweißnaht (B) auf der Grundlage der maximalen Hauptspannungsrichtung (D_{PS}) und der Lastbedingung zu bestimmen; und
eine Datenbank (37), konfiguriert, um eine Ermüdungsgrenze der Schweißnaht (B) mit einem Schnittwinkel zwischen der Bildungsrichtung der Schweißnaht (B) und einer Wirkungsrichtung einer Spannung, die in der Schweißnaht (B) erzeugt wird, zu korrelieren, wobei:
die Bahnverlaufsbestimmungseinheit (35) konfiguriert ist, um, unter Bezugnahme auf die Datenbank (37), die Bildungsrichtung der Schweißnaht (B) in dem Nahtbildungsbahnverlauf, innerhalb eines Bereichs des Schnittwinkels, der gleich oder größer als eine vorgegebene Konstruktionsermüdungsgrenze ist, zu bestimmen;
wobei die additive Fertigungsunterstützungsvorrichtung weiter beinhaltet:
eine Bahnverlaufskorrektureinheit (39), konfiguriert, um, wenn ein niederfester Abschnitt vorhanden ist, in dem die Ermüdungsgrenze, die dem Nahtbildungsbahnverlauf entspricht, der durch die Bahnverlaufsbestimmungseinheit (35) bestimmt wurde, kleiner ist als eine vorgegebene Konstruktionsermüdungsgrenze, der Nahtbildungsbahnverlauf in dem niederfesten Abschnitt so zu korrigieren, dass die Ermüdungsgrenze ansteigt; und
eine Formänderungseinheit (41), konfiguriert, um:
wenn ein niederfester Abschnitt vorhanden ist, in dem die Ermüdungsgrenze, die dem Nahtbildungsbahnverlauf entspricht, der **durch** die Bahnverlaufskorrektureinheit (39) korrigiert wurde, kleiner ist als eine vorgegebene Konstruktionsermüdungsgrenze, das Formmodell so zu ändern, dass die Ermüdungsgrenze ansteigt; und
eine Teilstruktur, die das Formmodell aufweist, in ein Formmodell zu ändern, bei dem ein Spannungskonzentrationskoeffizient für die entsprechende Struktur klein ist, und das Formmodell nach Änderung an die Baubedingungserfassungseinheit (31) auszugeben.

2. Additive Fertigungsunterstützungsvorrichtung nach Anspruch 1, wobei:
die Spannungsanalyseeinheit (33) weiter eine Funktion des Erhaltens einer Spannungsverteilung des Objekts und des Extrahierens eines Spannungskonzentrationsabschnitts mit einem höheren Spannungskonzentrationskoeffizienten als eine Umgebung; und
die Bahnverlaufsbestimmungseinheit (35) konfiguriert ist, um den Nahtbildungsbahnverlauf nur in dem extrahierten Spannungskonzentrationsabschnitt gemäß der maximalen Hauptspannungsrichtung (D_{PS}) zu bestimmen.

3. Verfahren zur additiven Fertigungsunterstützung für die Unterstützung der Bestimmung einer nahtbildungsbahnverlaufdarstellenden Bildungsreihenfolge der Schweißnaht (B) beim Bauen eines dreidimensional geformten Objekts durch Aufbringen einer linearen Schweißnaht (B), wobei das Verfahren umfasst:
ein Baubedingungserfassungsschritt (S11) des Erfassens von Informationen eines Formmodells des Objekts und einer auf das Objekt ausgeübten Lastbedingung, und Eingeben des erfassten Formmodells und der Lastbedingung in eine Baubedingungserfassungseinheit (31), die ein Formmodell, das die dreidimensionale Form des additiv gefertigten Objekts auf Grundlage der erfassten Informationen darstellt, erzeugt (S12);
wobei das Verfahren zur additiven Fertigungsunterstützung **gekennzeichnet ist durch**:
einen Spannungsanalyseschritt (S13) des Erhaltens einer maximalen Hauptspannungsrichtung (D_{PS}), die in jedem Abschnitt des Objekts erzeugt wird, **durch** Spannungsanalyse basierend auf dem erfassten Formmodell und der Lastbedingung; und
einen Bahnverlaufsbestimmungsschritt (S14) des Bestimmens einer Bildungsrichtung der Schweißnaht (B) auf der Grundlage der maximalen Hauptspannungsrichtung (D_{PS}) und der Lastbedingung;
**durch** Verwenden einer Datenbank (37), einen Schritt des Korrelierens einer Ermüdungsgrenze der Schweißnaht (B) mit einem Schnittwinkel zwischen der Bildungsrichtung der Schweißnaht (B) und einer Wirkungsrichtung einer Spannung, die in der Schweißnaht (B) erzeugt wird;
**durch** Verwenden einer Bahnverlaufsbestimmungseinheit (35), einen Schritt des Bestimmens, unter Bezugnahme auf die Datenbank (37), der Bildungsrichtung der Schweißnaht (B) in dem Nahtbildungsbahnverlauf, innerhalb eines Bereichs des Schnittwinkels, der gleich oder größer als eine vorgegebene Konstruktionsermüdungsgrenze ist;
wenn ein niederfester Abschnitt vorhanden ist, in dem die Ermüdungsgrenze, die dem Nahtbildungsbahnverlauf entspricht, der **durch** die Bahnverlaufsbestimmungseinheit (35) bestimmt wurde, kleiner ist als eine vorgegebene Konstruktionsermüdungsgrenze, **durch** Verwenden einer Bahnverlaufskorrektureinheit (39), einen Schritt des Korrigierens des Nahtbildungsbahnverlaufs in dem niederfesten Abschnitt so, dass die Ermüdungsgrenze ansteigt;
und
wenn ein niederfester Abschnitt vorhanden ist, in dem die Ermüdungsgrenze, die dem Nahtbildungsbahnverlauf entspricht, der **durch** die Bahnverlaufskorrektureinheit (39) korrigiert wurde, kleiner ist als eine vorgegebene Konstruktionsermüdungsgrenze, **durch** Verwenden einer Formänderungseinheit (41), einen Schritt des Änderns des Formmodells, so, dass die Ermüdungsgrenze ansteigt;
wobei die Formänderungseinheit (41) eine Teilstruktur, die das Formmodell aufweist, in ein Formmodell, in dem ein Spannungskonzentrationskoeffizient für die entsprechende Struktur klein ist, ändert, und um das Formmodell nach der Änderung an die Baubedingungserfassungseinheit (31) auszugeben.

## Revendications

1. Dispositif de support de fabrication additive destiné à supporter, lors de la construction d'un objet de forme tridimensionnelle en déposant un cordon de soudure linéaire (B) obtenu en faisant fondre et solidifiant un matériau de soudage, la détermination d'une trajectoire de formation de cordon représentant l'ordre de formation du cordon de soudure (B), le dispositif comprenant :
un module d'acquisition de condition de construction (31) configuré pour acquérir des informations sur un modèle de forme de l'objet et une condition de charge appliquée à l'objet ;
le dispositif de support de fabrication additive étant **caractérisé par** :
un module d'analyse de contrainte (33) configuré pour obtenir une direction de contrainte principale maximale (D_{PS}) générée dans chaque portion de l'objet par analyse de contrainte basée sur le modèle de forme et la condition de charge acquis ;
un module de détermination de trajectoire (35) configuré pour déterminer une direction de formation du cordon de soudure (B) en fonction de la direction de contrainte principale maximale (D_{PS}) et de la condition de charge ; et
une base de données (37) configurée pour mettre en corrélation une limite de fatigue du cordon de soudure (B) avec un angle d'intersection entre la direction de formation du cordon de soudure (B) et une direction d'action d'une contrainte générée dans le cordon de soudure (B), dans lequel :
le module de détermination de trajectoire (35) est configuré pour déterminer, en se référant à la base de données (37), la direction de formation du cordon de soudure (B) dans la trajectoire de formation de cordon au sein d'une plage de l'angle d'intersection qui est supérieure ou égale à une limite de fatigue de conception prédéfinie ;
dans lequel le dispositif de support de fabrication additive inclut en outre :
un module de correction de trajectoire (39) configuré pour corriger, lorsqu'il y a une portion à faible résistance dans laquelle la limite de fatigue correspondant à la trajectoire de formation de cordon déterminée par le module de détermination de trajectoire (35) est inférieure à une limite de fatigue de conception prédéfinie, la trajectoire de formation de cordon dans la portion à faible résistance de sorte que la limite de fatigue augmente ; et
un module de changement de forme (41) configuré pour :
lorsqu'il y a une portion à faible résistance dans laquelle la limite de fatigue correspondant à la trajectoire de formation de cordon corrigée par le module de correction de trajectoire (39) est inférieure à une limite de fatigue de conception prédéfinie, changer le modèle de forme de sorte que la limite de fatigue augmente ; et
changer une structure partielle qu'a le modèle de forme en un modèle de forme dans lequel un coefficient de concentration de contrainte pour la structure correspondante est faible et pour sortir le modèle de forme après changement vers le module d'acquisition de condition de construction (31).

2. Dispositif de support de fabrication additive selon la revendication 1, dans lequel :
le module d'analyse de contrainte (33) a en outre une fonction d'obtention d'une distribution de contrainte de l'objet et d'extraction d'une portion de concentration de contrainte ayant un coefficient de concentration de contrainte supérieur à une portion environnante ; et
le module de détermination de trajectoire (35) est configuré pour déterminer la trajectoire de formation de contrainte uniquement dans la portion de concentration de contrainte extraite en fonction de la direction de contrainte principale maximale (D_{PS}).

3. Procédé de support de fabrication additive destiné à supporter, lors de la construction d'un objet de forme tridimensionnelle en déposant un cordon de soudure linéaire (B) obtenu en faisant fondre et solidifiant un matériau de soudage, la détermination d'une trajectoire de formation de cordon représentant l'ordre de formation du cordon de soudure (B), le procédé comprenant :
une étape d'acquisition de condition de construction (S11) consistant à acquérir des informations sur un modèle de forme de l'objet et une condition de charge appliquée à l'objet, et entrer le modèle de forme et la condition de charge acquis vers un module d'acquisition de condition de construction (31) qui génère un modèle de forme représentant la forme tridimensionnelle de l'objet fabriqué de manière additive en fonction des informations acquises (S12) ;
le procédé de support de fabrication additive étant **caractérisé par** :
une étape d'analyse de contrainte (S13) consistant à obtenir une direction de contrainte principale maximale (D_{PS}) générée dans chaque portion de l'objet par analyse de contrainte basée sur le modèle de forme et la condition de charge acquis ; et
une étape de détermination de trajectoire (S14) consistant à déterminer une direction de formation du cordon de soudure (B) en fonction de la direction de contrainte principale maximale (D_{PS}) et de la condition de charge ;
en utilisant une base de données (37), une étape de mise en corrélation d'une limite de fatigue du cordon de soudure (B) avec un angle d'intersection entre la direction de formation du cordon de soudure (B) et une direction d'action d'une contrainte générée dans le cordon de soudure (B) :
en utilisant un module de détermination de trajectoire (35), une étape de détermination, en se référant à la base de données (37), de la direction de formation du cordon de soudure (B) dans la trajectoire de formation de cordon au sein d'une plage de l'angle d'intersection qui est supérieure ou égale à une limite de fatigue de conception prédéfinie ;
lorsqu'il y a une portion à faible résistance dans laquelle la limite de fatigue correspondant à la trajectoire de formation de cordon déterminée par le module de détermination de trajectoire (35) est inférieure à une limite de fatigue de conception prédéfinie, en utilisant un module de correction de trajectoire (39), une étape de correction de la trajectoire de formation de cordon dans la portion à faible résistance de sorte que la limite de fatigue augmente ; et
lorsqu'il y a une portion à faible résistance dans laquelle la limite de fatigue correspondant à la trajectoire de formation de cordon corrigée par le module de correction de trajectoire (39) est inférieure à une limite de fatigue de conception prédéfinie, en utilisant un module de changement de forme (41), une étape de changement du modèle de forme de sorte que la limite de fatigue augmente ;
dans lequel le module de changement de forme (41) change une structure partielle qu'a le modèle de forme en un modèle de forme dans lequel un coefficient de concentration de contrainte pour la structure correspondante est faible, et pour sortir le modèle de forme après changement vers le module d'acquisition de condition de construction (31).
